# EUROPÄISCHE PATENTSCHRIFT

(11) **EP 2 516 568 B1**
(45) Veröffentlichungstag und Bekanntmachung des Hinweises auf die Patenterteilung: **16.10.2013**
(21) Anmeldenummer: 10798716.6
(22) Anmeldetag: 20.12.2010
(51) Int. Cl.: B32B 17/10

(54) **VERFAHREN ZUR HERSTELLUNG EINES SCHUTZELEMENTS**
METHOD FOR THE PRODUCTION OF A PROTECTIVE ELEMENT
PROCÉDÉ DE FABRICATION D'UN ÉLÉMENT DE PROTECTION

(30) Priorität: 21.12.2009 CH 19622009
(43) Veröffentlichungstag der Anmeldung: 31.10.2012
(73) Patentinhaber: Vetrotech Saint-Gobain (International) AG, 3175 Flamatt (CH)
(72) Erfinder: GELDERIE, Udo, 52146 Würselen (DE); SCHWANKHAUS, Norbert, 52499 Baesweiler (DE)
(74) Vertreter: Frei Patent Attorneys
(86) Internationale Anmeldenummer: PCT/CH2010/000316
(87) Internationale Veröffentlichungsnummer: WO 2011/075857

(56) Entgegenhaltungen:
- EP-B1- 0 620 781
- WO-A1-02/100636
- WO-A1-2007/118887
- DE-A1- 3 740 330

## Beschreibung

Die Erfindung betrifft ein Verfahren zur Herstellung eines lichtdurchlässigen Schutzelements mit mindestens zwei Trägerelementen, beispielsweise Glasplatten, und einer aufschäumenden Brandschutzschicht in einem Zwischenraum zwischen den Trägerelementen.

Solche Schutzelemente sind beispielsweise aus der EP 0 620 781 bekannt. Die in dieser Schrift gelehrte Brandschutzschicht ist ein wässriges Alkalisilikat, welche durch Aushärten einer wasserhaltigen Füllmasse aus einem Alkalisilikat und einem Härter zu einem Polysilikat erzeugt wird. Im Polysilikat besteht dabei ein Molverhältnis von Siliziumdioxid zu Alkali-Metalloxid von mindestens 4:1. Die ausgehärtete Brandschutzschicht enthält im wesentlichen das gesamte Wasser der wasserhaltigen Füllmasse, indem das Aushärten im versiegelten Zwischenraum zwischen den Trägerelementen stattfindet. Der Wasseranteil beträgt zwischen 44 und 60 Gewichtsprozent. Das so hergestellte Hitzeschutzelement hat ausgezeichnete Brandschutzeigenschaften und ist in einem rationellen Prozess herstellbar.

Ein alternativer Prozess zum Erzeugen einer Brandschutzschicht ist beispielsweise aus der FR 2 607 491 oder aus der WO 2007/118887 bekannt. Dieser alternative Prozess sieht vor, eine Alkalisilikatschicht im flüssigen Zustand auf eine Glasplatte zu giessen und anschliessend zu trocknen, wobei die Brandschutzschicht in der Anwendung auf der Glasplatte verbleibt und im Endzustand einen vergleichsweise geringen Wassergehalt von beispielsweise zwischen 22% und 35% (Gewichts-%) hat. Die zweite Glasplatte wird nach dem Trocknungsprozess mit der Brandschutzschicht verklebt. Der alternative Prozess hat den Nachteil, dass der physikalische Trocknungsprozess viel Zeit in Anspruch nimmt, was die Herstellung des Hitzeschutzelements erheblich verteuert.

Brandschutzschichten gemäss dem Stand der Technik haben also im Allgemeinen einen verhältnismässig hohen Flüssigkeitsgehalt, und das kann bewirken, dass die Brandschutzschicht eine Rest-Fliessfähigkeit hat. Eine Senkung des Wassergehalts der Ausgangsprodukte für das Mischen der Füllmasse d.h. die Verwendung höher konzentrierter Rohstoffe ist oft nicht machbar, da Lösungen bei zu hohem Feststoffgehalt kollabieren und es zu Ausfällungen kommt. Das gilt beispielsweise für Kaliumsilikat und Kieselsol oder auch für Kalilauge und einer Aufschlämmung vom pyrogener Kieselsäure. Es ist auch aus der EP 0 620 781 oder der EP 1 399 314 bekannt, die Füllmasse vor dem Einbringen in den Zwischenraum im Mischbehälter zu entgasen, wobei auch Wasser entweicht. Die Menge des dabei entnehmbaren Wassers ist jedoch sehr klein, da die Füllmasse im Mischbehälter nicht so weit erhitzt werden darf und nicht so lange dem Verdampfungsprozess ausgesetzt werden darf, bis der Härtungsvorgang einsetzt bzw. zu weit fortschreitet. Nach dem Einbringen in den Zwischenraum kann praktisch gar kein Wasser mehr entnommen werden, weil der Zwischenraum während der chemischen Härtung der Silikatmasse hermetisch versiegelt werden muss.

Es ist eine Aufgabe der Erfindung, ein Hitzeschutzelement und ein Verfahren zu seiner Herstellung zur Verfügung zu stellen, welches die Nachteile des Standes der Technik überwindet und welches in einem rationellen Herstellungsprozess die Synthese einer Brandschutzmasse erlaubt, die gute Brandschutzeigenschaften hat.

Diese Aufgabe wird durch die Erfindung gelöst, wie sie in den Patentansprüchen definiert ist.

Gemäss einem Aspekt der Erfindung wird ein Verfahren zur Herstellung eines Brandschutzelements mit den folgenden Schritten zur Verfügung gestellt:
- Mischen einer wässrigen, aushärtbaren Alkalisilikatlösung mit Siliziumdioxid-Nanopartikeln zu einer Füllmasse mit einem ersten Wassergehalt;
- Dünnfilm-Verdampfung eines Teils des Wassers der Füllmasse bis die Füllmasse einen zweiten Wassergehalt hat, der geringer ist als der erste Wassergehalt, wobei die Füllmasse beim zweiten Wassergehalt fliessfähig ist;
- Einfüllen der Füllmasse mit dem zweiten Wassergehalt in einen Zwischenraum zwischen zwei transparenten Trägerelementen;
- Aushärten der Füllmasse im Zwischenraum zwischen den Trägerelementen unter Beibehaltung des zweiten Wassergehalts.

Dieser Ansatz beruht zunächst auf der überraschenden Erkenntnis, dass in einem Dünnfilm-Verdampfungsverfahren der Gehalt an Wasser substantiell reduziert werden kann, ohne dass das vom Stand der Technik her bekannte Dilemma besteht, dass eine höhere Wasserreduktion aufgrund der höheren Temperaturen und/oder Standzeiten mit einem beschleunigten Aushärten einher geht und daher nur in insignifikanten Mengen machbar ist, ohne dass die Fliessfähigkeit zu sehr eingeschränkt würde. Es wurde ebenfalls gefunden, dass bei substantiellen verdampften Wassermengen kein Ausfällen stattfindet, wie das bei Kolloiden und/oder silikatischen Mischungen zu befürchten wäre, sondern die Homogenität und die Fliesseigenschaften beibehalten werden können.

Die Dünnfilm-Verdampfung wird auch als "Dünnschicht-Verdampfung" oder als "Fallfilmverdampfung" bezeichnet. Entsprechende Geräte sind in verschiedenen Ausführungsformen erhältlich. Die Dünnfilm-Verdampfung ist an sich als schonende thermische Trennmethode in Destillationsverfahren für die Chemie, Pharmazie und Lebensmittelverarbeitung bekannt. Bei Dünnfilm-Verdampfem wird das Rohprodukt in einem kontinuierlichen Prozess an einer im Allgemeinen beheizten Wand als dünner Film entlang nach unten geleitet. Dies geschieht unter Bedingungen, bei denen die flüchtige Komponente verdampft. Beispielsweise kann das Verdampfen in einer Atmosphäre mit reduziertem Druck geschehen. Die Wand kann beispielsweise eine Wand eines von aussen beheizten Rohres sein, an dessen Innenfläche das Rohprodukt entlang geführt wird. In Anlagen gemäss dem Stand der Technik wird anschliessend das mit der flüchtigen Komponente gesättigte Gas (die Brüden) an einem Kondensator niedergeschlagen um das Destillat zu gewinnen.

Die Dünnfilm-Verdampfung für ein Verfahren gemäss der Erfindung findet ebenfalls dadurch statt, dass die Ausgangs-Füllmasse (d.h. die Füllmasse vor dem Flüssigkeitsentzug) auf eine beispielsweise beheizte Wand aufgebracht wird. Beim Aufbringen wird vorzugsweise die Füllmasse entlang einer Oberseite der Wand verteilt, beispielsweise mit mechanischen Mitteln wie Wischern. Die Füllmasse fliest dann an der Wand entlang in einer Umgebung unter Unterdruck aufgrund der Schwerkraft nach unten, und die resultierende flüssigkeitsreduzierte Füllmasse fliesst unten aus. Die flüssigkeitsreduzierte Füllmasse wird anschliessend dem Zwischenraum zwischen den Trägerelementen zugeführt.

Die beheizte Wand kann eine Innenwand eines beispielsweise beheizten Rohres sein. Die Temperatur der Wand kann zwischen Raumtemperatur (20°C) und 70°C sein, bevorzugt zwischen 25°C und 45°C, bspw. zwischen 28°C und 42°C oder zwischen 30°C und 40°C. Der Druck ist bspw. maximal 350 mbar, zwischen 0.01 mbar und 310mbar, zwischen 0.01 mbar und 200 mbar oder zwischen 1 mbar und 100 mbar (je nach zur Verfügung stehender Anlage), bevorzugt zwischen 2 mbar und 70 mbar, beispielsweise zwischen 10 mbar und 50 mbar. Generell ist durch Absenkung des Drucks eine Reduzierung der Temperatur möglich. Daher sind hier Einstellungen in einem weiten Druck-Temperaturbereich möglich wobei die bekannten physikalischen Zusammenhänge gelten. Die Brüden werden nicht benötigt. Sie können nach aussen entweichen, oder die Feuchtigkeit in den Brüden kann bspw. zur Wärmerückgewinnung auskondensiert werden, wobei das Kondensat verworfen werden kann.

Eine zweite überraschende Erkenntnis ist, dass sich hochkonzentrierte Alkalisilikat-Füllmassen chemisch härten lassen, auch wenn der Wassergehalt mit Hilfe der Dünnfilmverdampfer-Technologie um beispielsweise bis zu 8% (Der Wassergehalt wird in dieser Schrift jeweils in Gewichtsprozenten angegeben) oder mehr gegenüber dem ursprünglichen Wassergehalt gesenkt wird, ohne dass Eintrübungen oder Ausfällungen in der Brandschutzschicht im Endzustand zu beobachten sind.

Eine dritte Erkenntnis ist, dass auch bei reduziertem Wassergehalt von bspw. zwischen 33% und 42%, bevorzugt zwischen 35% und 40% die Brandschutzeigenschaften der Poly-Alkalisilikat-Brandschutzschicht sehr gut sind. Die im Vergleich zu Brandschutzschichten mit höherem Wassergehalt geringere Kühlungswirkung aufgrund der Verdampfungswärme des Wassers kann oft mindestens teilweise dadurch kompensiert werden, dass die Schaumstruktur beim Aufschäumen der Brandschutzschicht eine andere ist als bei höherem Wassergehalt. Insbesondere kann die Schaumstruktur feiner sein als bei höherem Wassergehalt, was eine verbesserte Isolierwirkung bedeuten kann.

Die Dünnfilm-Verdampfung findet beim erfindungsgemässen Verfahren, wie an sich von Destillationsverfahren bekannt, in einem kontinuierlichen Prozess statt, indem man die Füllmasse entlang einer vorzugsweise beheizbaren Kolonnen-Aussenwand ablaufen lässt.

Bei der Dünnfilm-Verdampfung kann ein Vakuum appliziert werden, so dass bei vergleichsweise niedrigen Temperaturen viel Flüssigkeit entzogen werden kann, ohne dass eine chemische Reaktion zu stark beschleunigt wird. Die Viskosität der Füllmasse mit dem zweiten Wassergehalt kann verhältnismässig niedrig bleiben, weil dank der niedrigen Temperaturen der Aushärtungsprozess beim Dünnfilmverdampfen nur unwesentlich in Gang gesetzt wird.

Die Reduktion des Wassergehaltes durch das Dünnfilmverdampfen, d.h. der Unterschied zischen dem ersten und dem zweiten Wassergehalt beträgt beispielsweise zwischen 3% und 10%, insbesondere zwischen 5% und 8%.

Gemäss Ausführungsformen wird eine in der EP 0 620 781 offenbarte Füllmasse beim erfindungsgemässen Vorgehen als Ausgangs-Füllmasse (vor dem Dünnfilmverdampfen) verwendet. Auf die in dieser Schrift offenbarten Mengenverhältnisse und Beispiele wird hier explizit Bezug genommen; diese sind als Ausgangs-Füllmassen für die vorliegende Erfindung anwendbar.

Gemäss alternativen Ausführungsformen wird die Ausgangs-Füllmasse durch Mischen von Alkalilauge, beispielsweise Kalilauge, mit einem Kolloid mit SiO₂-Nanopartikeln hergestellt. Das Kolloid kann dabei ein Kieselsol sein. Ebenso sind aber auch Aufschlämmungen von pyrogenem SiO2 in einer wasserhaltigen Flüssigkeit möglich.

Gemäss Ausführungsformen der Erfindung wird die Ausgangs-Füllmasse hergestellt, indem Kaliumsilikat (Wasserglas) und/oder Kalilauge mit SiO₂-Partikeln (bereitgestellt in der Form von Kieselsolen und/oder in Wasser suspendiertem, pyrogenem SiO₂) gemischt, wobei das Molverhältnis von Siliziumdioxid SiO₂ zu Kaliumoxid K₂O (Modul) in der Füllmasse mindestens 4:1 beträgt. Anstelle von Kaliumsilikat kann auch ein Natriumsilikat, ein Lithiumsilikat oder eine Mischung von Kalium- Natrium- und/oder Lithiumsilikaten verwendet werden, wobei das Modul auch in diesen Fällen vorzugsweise mindestens 4:1 beträgt.

Ein erfindungsgemäss hergestelltes Brandschutzelement weist nebst der Füllmasse die Trägerelemente (beispielsweise zwei oder mehr parallele Glasscheiben) sowie die Mittel zum randseitigen Versiegeln auf. Solche Mittel sind an sich bekannt, wobei beispielsweise auf die WO 03/031173 und das darin beschriebene Verfahren und die darin beschriebenen Mittel verwiesen wird. Insbesondere können solche Mittel einen Abstand haltenden randseitig umlaufenden Strang zwischen den Scheiben aufweisen, der beispielsweise thermoplastisch und/oder elastomer ist. In Ausführungsformen weist eine Randdichtung einander benachbart je einen umlaufenden, Abstand haltenden und einen umlaufenden, dichtenden Strang, jeweils zwischen den Glasscheiben auf.

In Ausführungsformen wird ein Abstandhalter aus einem thermoplastischen und/oder elastomeren Material mittels einer Extrusionsmaschine auf den Randbereich appliziert, d.h. es wird kein vorgefertigtes Band verwendet.

In alternativen Ausführungsformen wird ein vorgefertigtes Band verwendet, bspw. ein Butyl-Band mit oder ohne Gummi-/Kunststoff-Innenkern (Novalastik-Band).

Besonders vorteilhaft als Trägerelemente sind vorgespannte Glasscheiben und/oder beschichtete Glasscheiben. So kann bspw. mindestens eine der Glasscheiben vorgespannt, beispielsweise thermisch vorgespannt sein. Ergänzend oder alternativ kann mindestens eine der Glasscheiben mindestens eine beschichtete Oberfläche aufweisen.

Die Kombination mit vorgespannten Glasscheiben ist vorteilhaft, weil deren besonders gute Hitzebeständigkeit optimal mit der Brandschutzeigenschaft der aufschäumenden Polysilikatmasse zusammenwirkt; aber auch nicht vorgespannte Glasscheiben oder andere im Allgemeinen transparente Trägerelemente sind verwendbar.

Beschichtete Glassscheiben können mit an sich bekannten Beschichtungen - bspw. zum reduzieren der durchtretenden Hitzestrahlung und/oder Primerschichten zum Optimieren der Hafteigenschaften von Glasscheibe und Brandschutzmasse - versehen sein, welche die Brandschutzeigenschaften verstärken und/oder andere vorteilhafte Wirkungen haben.

Nachfolgend werden Ausführungsbeispiele der Erfindung mit weiteren Details anhand einer Figur beschrieben. Es zeigt:

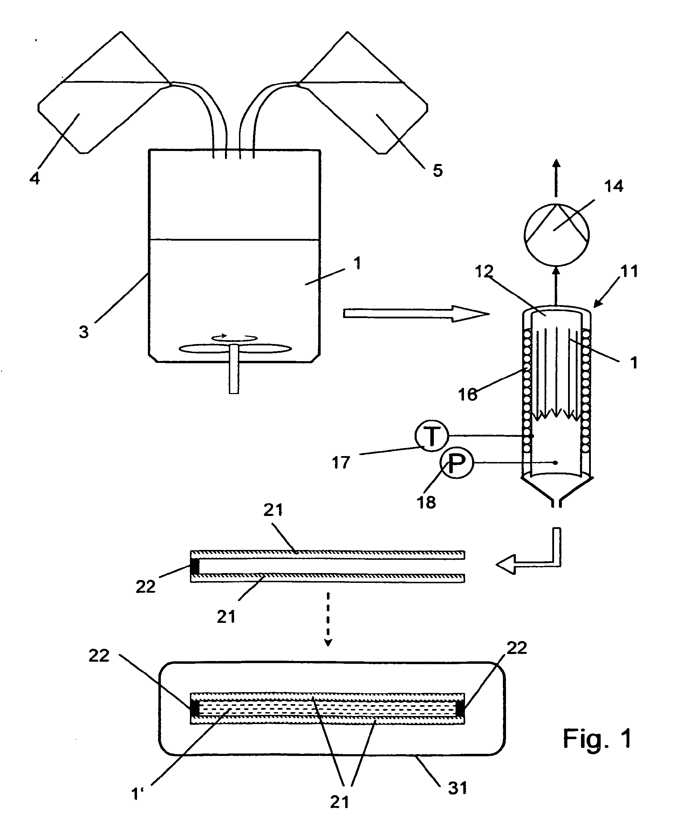

- Fig. 1 ein Schema, welches den Ablauf des erfindungsgemässen Verfahrens skizziert.

Wie an sich bekannt wird beim Verfahren gemäss Figur 1 die Ausgangs-Füllmasse 1 zunächst in einem Mischgefäss 3 aus ihren Komponenten 4, 5 zusammengeführt und wenn nötig durch geeignete mechanische Mittel gut durchmischt. Die Komponenten 4, 5 können ein Alkalisilikat oder eine Alkalilauge und ein Kolloid bzw. eine Suspension mit Siliziumdioxid-Partikeln sein. Die Komponentenzusammensetzung und das Mischverhältnis sind so gewählt, dass Molverhältnis Siliziumdioxid:Alkalimetalloxid zwischen 4 und 7 beträgt und dass der Wassergehalt der Mischung zwischen 40% und 60% beträgt.

Anschliessend gelangt die durch Mischen hergestellte Füllmasse ohne substantielle zeitliche Verzögerung in den Dünnfilverdampfer 11. Dieser kann in an sich für schonende Destillationsverdampfer bekannter Art ausgerührt sein.

Die Ausgangs-Füllmasse 1 wird auf der Innenwand 12 des Innenrohrs aufgebracht, wobei durch einen oder mehrere Wischer (bspw. umlaufende Wischerrollen wie an sich von Dünnfilmverdampfern bekannt; nicht gezeichnet) für eine gleichmässige Verteilung in der Umfangsrichtung gesorgt wird. Aufgrund der Schwerkraft fliesst die Füllmasse 1 der Innenwand entlang nach unten. Der Füllmassen-Ein- und Austrag erfolgen kontinuierlich, wie an sich ebenfalls von Destillationsverfahren bekannt. Durch eine Wärmetauschflüssigkeit 16, die im Rohrmantel zirkuliert, wird das Innenrohr 12 auf eine vorgegebene Temperatur gebracht und auf dieser gehalten (Temperaturregelung 17). In der Füllmasse vorhandene flüchtige Komponenten - insbesondere Wasser - werden dadurch verdampft, wobei der Massenumsatz des Verdampfungsprozesses aufgrund der grossen Oberfläche verhältnismässig sehr gross ist. Die entstehenden Brüden werden durch eine geeignete Pumpe 14 abgesaugt, wobei das Rohrinnere auf einem beispielsweise geregelten Druck (Druckregler 18) gehalten wird, welcher markant unter Atmosphärendruck liegt. Die in den Brüden enthaltenen flüchtigen Substanzen können mindestens teilweise auskondensiert werden - wodurch sich beispielsweise Verdampfungswärme zurückgewinnen lässt - oder sie können nach aussen entweichen. Falls die flüchtigen Substanzen auskondensiert werden, kann das Kondensat - hauptsächlich Wasser - verworfen werden.

Die Durchflussmenge durch den Dünnfilmverdampfer wird so geregelt, dass die Füllmasse (nur) so lange im Verdampfer verweilt, bis die gewünschte Flüssigkeitsmenge von bspw. zwischen 3% und 10% entzogen ist. Durch Einstellen der Innenwand-Temperatur (bspw. zwischen 25°C und 37°C) und des Arbeitsdrucks (bspw. zwischen 0.01 mbar und 100 mbar oder zwischen 1 mbar und 100 mbar) kann die entzogene Flüssigkeitsmenge eingestellt werden. Zwischen dem Arbeitsdruck und der Innenwand-Temperatur gibt es eine Korrelation: Je niedriger das Vakuum, desto niedriger kann auch die Temperatur sein.

Die Verweilzeit im Verdampfer beträgt oft zwischen 10 s und 20 Minuten, bevorzugt zwischen 20 s und 3 Minuten. Die Verweilzeit bzw. die Durchsätze sind natürlich stark von der Dimensionierung der jeweiligen Anlage abhängig.

Die flüssigkeitsreduzierte Füllmasse 1' wird in den Zwischenraum zwischen zwei transparenten Trägerelementen 21 eingefüllt, wobei in an sich bekannter Weise eine umlaufende Dichtung 22 vorhanden ist, die an mindestens einer Stelle eine Einfüllöffnung frei lässt. Nach vollständiger Befüllung des Zwischenraums wird die umlaufende Dichtung 22 in ebenfalls an sich bekannter Art vervollständigt, und es ergibt sich ein versiegelter, mit der flüssigkeitsreduzierten Füllmasse 1' befüllter Hohlraum.

Selbstverständlich können auch Arrangements mit mehr als zwei parallelen Trägerelementen mit der flüssigkeitsreduzierten Füllmasse befüllt werden; solche sind ebenfalls an sich bekannt.

Die umlaufende Dichtung zwischen den Glasplatten in der gezeichneten Art kann auch durch ein anderes Mittel ersetzt sein, bspw. eine aufgeklebte Folie, welche im Brandfall durch aufschäumende, austretende Brandschutzmasse verdrängt wird.

Ein Aushärten der Füllmasse 1' zu einem Alkali-Polysilikat kann bei Raumtemperatur oder - beschleunigt - in einem geeigneten Ofen 31 bei erhöhter Temperatur stattfinden.

Der Abstand zwischen den zwei Gläsern kann beliebig sein; dasselbe gilt auch für den Fall der Verwendung drei, vier, fünf oder mehr parallelen Gläsern. Der Abstand beträgt beispielsweise mindestens 1.5 mm, mindestens 2 mm, oder mindestens 2.5 mm. Das erfindungsgemässe Verfahren ist aber auch besonders geeignet für die Befüllung von verhältnismässig grossen Zwischenräumen mit einem Abstand der Trägerelemente von 3 mm oder mehr.

Anstelle des skizzierten Dünnfilmverdampfers 11 mit einem beheizbaren Innenrohr und mit nach oben abgesaugten Brüden können auch andere Apparate verwendet werden, die ein Dünnschichtverdampfungsverfahren ermöglichen,. Auch solche beruhen im Allgemeinen auf dem Prinzip, dass die Ausgangs-Füllmasse 1 in einer dünnen Schicht auf eine Wand aufgebracht wird, entlang welcher sie vorzugsweise unter dem Einfluss der Schwerkraft fliesst und dabei Flüssigkeit, darunter insbesondere Wasser, verdampft und wegtransportiert wird.

Beispielsweise ist bei einem Dünnfilmverdampfer der gezeichneten Art der minimale Druck im Innern des Innenrohrs auf ca. 1 mbar begrenzt. In Situationen, in denen ein tieferer Druck gewünscht wird, kann auch ein im Innern des Rohres verlaufender Kondensator verwendet werden, der eine weitere Reduktion des Drucks bewirkt. In einer solchen Ausführungsform ist der Dünnfilmverdampfer ein Kurzwegverdampfer.

Weitere Varianten von auf dem Dünnfilmverdampferprinzip beruhenden Verdampfem - bspw. mit aussenseitig auf einem Rohr nach unten laufender Füllmasse, mit anderen als zylindrischen Formen der Wand und/oder mit nicht ganz vertikalen sondern schiefen Wänden - sind denkbar. Auch für die Beheizung sind andere Massnahmen als die gezeichnete Wärmezufuhr durch eine Wärmetauschflüssigkeit denkbar, bspw. die direkte elektrische Beheizung mit Widerstandselementen, oder mit elektromagnetischer Induktion.

### Beispiel 1:

Eine fliessfähige, trübe Kalisilikat-Füllmasse wird aus einem Kieselsol geeigneter Konzentration und einer Kaliumsilikat-Wasserglaslösung und einem geringen Anteil von ca. 5 Gew.-% Glycerin als Frostschutzmittel gemischt, welche als Füllmasse zu einem Polysilikat mit einem Molverhältnis von 4.7:1 aushärtbar ist. Der Wassergehalt in der Füllmasse beträgt 47%. Anschliessend wird die Füllmasse in einem Dünnfilmverdampfer mit einem von aussen geheizten doppelwandigen Rohr innenseitig aufgetragen und mit einem Wischer dünn ausgestrichen. Es bildet sich eine von aussen beheizte Oberfläche. Der Arbeitsdruck im Verdampfer beträgt 50 mbar, die Heizmantel- (Innenrohr-)Temperatur 40°C. Bei einem Durchfluss von 15-17 kg/h wird der Wassergehalt der Füllmasse auf 39% reduziert. Die flüssigkeitsreduzierte Füllmasse ist immer noch fliessfähig (mit einer resultierenden Viskosität von ca. 150 mPas bei 20°C) und trübe und fliesst unten aus dem Destillationsbereich des Dünnfilmverdampfers ab. Sie wird in einen Zwischenraum zwischen zwei Glasscheiben mit einer umlaufenden Dichtung mit Einfüllöfnung eingebracht, wobei der Abstand zwischen den Glassscheiben 3 mm beträgt. Die Einfüllöffnung wird verschlossen. Das aus den Glasscheiben mit Dichtung und der Füllmasse bestehende Hitzeschutzelement wird in einen Ofen mit Betriebstemperatur 80°C gebracht, wo die Füllmasse unter Beibehaltung des reduzierten Wassergehalts zu einem transparenten Polysilikat aushärtet.

**Beispiel 2:** Eine fliessfähige, trübe Kalisilikat-Füllmasse wird aus einer Aufschlämmung aus pyrogenem Siliziumdioxid geeigneter Konzentration und einer Kalilauge und einem geringen Anteil von ca. 3 Gew.-% Monoethylenglycol als Frostschutzmittel gemischt, welche als Füllmasse zu einem Polysilikat mit einem Molverhältnis von 4.2:1 aushärtbar ist. Der Wassergehalt in der Füllmasse beträgt 45%. Anschliessend wird die Füllmasse in einem Dünnfilmverdampfer mit einem von aussen geheizten doppelwandigen Rohr innenseitig aufgetragen und mit einem Wischer dünn ausgestrichen. Es bildet sich eine von aussen beheizte Oberfläche. Der Arbeitsdruck im Verdampfer beträgt 130 mbar, die Heizmantel- (Innenrohr-) Temperatur 60 °C. Bei einem Durchfluss von 20 kg/h wird der Wassergehalt der Füllmasse auf 37 % reduziert. Die flüssigkeitsreduzierte Füllmasse ist immer noch fliessfähig (mit einer resultierenden Viskosität von ca. 180 mPas bei 20°C) und trübe und fliesst unten aus dem Destillationsbereich des Dünnfilmverdampfers ab. Sie wird in einen Zwischenraum zwischen zwei Glasscheiben mit einer umlaufenden Dichtung mit Einfüllöffnung eingebracht, wobei der Abstand zwischen den Glassscheiben 6 mm beträgt. Die Einfüllöfnung wird verschlossen. Das aus den Glasscheiben mit Dichtung und der Füllmasse bestehende Hitzeschutzelement wird in einen Ofen mit Betriebstemperatur 85°C gebracht, wo die Füllmasse unter Beibehaltung des reduzierten Wassergehalts zu einem transparenten Polysilikat aushärtet.

## Patentansprüche

1. Verfahren zur Herstellung eines Brandschutzelements mit den Schritten:
- Zubereiten einer wässrigen, aushärtbaren Alkalisilikatlösung mit Siliziumdioxid-Nanopartikeln als Füllmasse mit einem ersten Wassergehalt;
- Dünnfilm-Verdampfung eines Teils des Wassers der Füllmasse bis die Füllmasse einen zweiten Wassergehalt hat, der geringer ist als der erste Wassergehalt, wobei die Füllmasse beim zweiten Wassergehalt fliessfähig ist;
- Einfüllen der Füllmasse mit dem zweiten Wassergehalt in einen Zwischenraum zwischen mindestens zwei transparenten Trägerelementen;
- Aushärten der Füllmasse im Zwischenraum zwischen den Trägerelementen unter Beibehaltung des zweiten Wassergehalts.

2. Verfahren nach Anspruch 1, wobei die Zubereitung der Füllmasse durch Mischen mindestens einer ersten Komponente mit einer zweiten Komponente geschieht.

3. Verfahren nach Anspruch 2, wobei die erste Komponente in Wasser dispergierte Siliziumdioxidpartikel aufweist und die zweite Komponente ein Alkalisilikat oder eine Alkalilage ist.

4. Verfahren nach einem der vorangehenden Ansprüche, wobei die Füllmasse zu einem Polysilikat mit einem Molverhältnis SiO₂:Me₂O von zwischen 4:1 und 7:1 aushärtbar ist, wobei Me₂O ein Alkalimetalloxid mit Me=K, Na, und/oder Li ist.

5. Verfahren nach einem der vorangehenden Ansprüche, wobei der erste Wassergehalt zwischen 40 Gewichts-% und 50 Gewichts-% liegt und wobei der zweite Wassergehalt um zwischen 4 Gewichts-% und 10 Gewichts-% tiefer ist als der erste Wassergehalt.

6. Verfahren nach einem der vorangehenden Ansprüche, wobei die Dünnfilm-Verdampfung in einem kontinuierlichen Prozess mit kontinuierlicher Füllmassen-Zuführung und Füllmassen-Abführung durchgeführt wird.

7. Verfahren nach Anspruch 6, wobei die Dünnfilm-Verdampfung folgende Verfahrens-Teilschritte umfasst:
- Verteilen von zugeführter Füllmasse Mitteln an einer Oberseite einer ein Gefälle aufweisenden Wand;
- Nach-unten-fliessen-lassen der Füllmasse entlang der Wand aufgrund der Schwerkraft unter gleichzeitigem Wegtransport des verdampften Wassers;
- Abführen der nach unten geflossenen Füllmasse.

8. Verfahren nach Anspruch 7, wobei die Wand beheizt wird und eine Temperatur von zwischen 20°C und 65°C hat.

9. Verfahren nach Anspruch 7 oder 8, wobei der Raum, in welchen das Wasser verdampft, auf einem Unterdruck von 310 mbar oder weniger gehalten wird.

10. Verfahren nach einem der Ansprüche 7 bis 9, wobei die Wand ein Rohr bildet und die Füllmasse entlang der Rohrinnenseite nach unten fliesst.

11. Verfahren nach einem der vorangehenden Ansprüche, wobei die Trägerelemente Glasscheiben sind.

12. Verfahren nach Anspruch 11, wobei mindestens ein der Glasscheiben vorgespannt ist.

13. Verfahren nach Anspruch 11 oder 12, wobei mindestens eine der Glasscheiben beschichtet ist.

## Claims

1. A process for producing a fire protection element, the process comprising the steps of:
- preparing an aqueous, hardenable alkali metal silicate solution with silicon dioxide nanoparticles as filler composition having a first water content;
- thin film evaporating a part of the water of the filler composition until the filler composition has a second water content which is lower than the first water content, with the filler composition being flowable at the second water content;
- introducing the filler composition having the second water content into an intermediate space between two transparent support elements;
- hardening the filler composition in the intermediate space between the support elements while maintaining the second water content.

2. The process as claimed in claim 1, wherein the step of preparing the filler composition occurs by mixing of at least one first component with a second component.

3. The process as claimed in claim 2, wherein the first component comprises silicon dioxide particles dispersed in water and the second component is an alkali metal silicate or an alkali metal hydroxide.

4. The process as claimed in any of the preceding claims, wherein the filler composition is hardenable to give a polysilicate having a molar ratio of SiO₂:Me₂O in the range from 4:1 to 7:1, where Me₂O is an alkali metal oxide where Me=K, Na, and/or Li.

5. The process as claimed in any of the preceding claims, wherein the first water content is in the range from 40% by weight to 50% by weight and the second water content is from 4% by weight to 10% by weight lower than the first water content.

6. The process as claimed in any of the preceding claims, wherein the step of thin film evaporating is carried out in a continuous process with continuous introduction of filler composition and discharge of filler composition.

7. The process as claimed in claim 6, wherein the thin film evaporation comprises the following process substeps:
- distributing introduced filler composition across an upper side of a wall having a gradient;
- allowing the filler composition to flow along the wall effected by gravity with simultaneous removal of the evaporated water;
- discharging the filler composition which has flowed downward.

8. The process as claimed in claim 7, wherein the wall is heated and has a temperature in the range from 20°C to 65°C.

9. The process as claimed in claim 7 or 8, wherein the space in which the water evaporates is maintained at a reduced pressure of 310 mbar or less.

10. The process as claimed in any of claims 1 to 9, wherein the wall forms a tube and the filler composition flows downward along the inside of the tube.

11. The process as claimed in any of the preceding claims, wherein the support elements are glass plates.

12. The process as claimed in claim 11, wherein at least one of the glass plates is toughened.

13. The process as claimed in claim 11 or 12, wherein at least one of the glass plates is coated.

## Revendications

1. Procédé de fabrication d'un élément de protection contre le feu, le procédé présentant les étapes qui consistent à :
préparer une solution aqueuse durcissable de silicate de métal alcalin présentant des nanoparticules de dioxyde de silicium, sous la forme d'une pâte de remplissage présentant une première teneur en eau,
vaporiser en film mince une partie de l'eau de la pâte de remplissage jusqu'à ce que la pâte de remplissage présente une deuxième teneur en eau inférieure à la première teneur en eau, la pâte de remplissage restant fluide à la deuxième teneur en eau,
introduire la pâte de remplissage présentant la deuxième teneur en eau dans l'espace intermédiaire situé entre au moins deux éléments transparents de support et
faire durcir la pâte de remplissage dans l'espace intermédiaire compris entre les éléments de support tout en conservant la deuxième teneur en eau.

2. Procédé selon la revendication 1, dans lequel la préparation de la pâte de remplissage s'effectue par mélange d'au moins un premier composant avec un deuxième composant.

3. Procédé selon la revendication 2, dans lequel le premier composant présente des particules de dioxyde de silicium dispersées dans l'eau et le deuxième composant un silicate de métal alcalin ou une lessive de métal alcalin.

4. Procédé selon l'une des revendications précédentes, dans lequel la pâte de remplissage peut être durcie en un polysilicate qui présente un rapport molaire SiO₂:MeO₂O compris entre 4:1 et 7:1, Me₂O étant un oxyde de métal alcalin avec Me = K, Na et/ou Li.

5. Procédé selon l'une des revendications précédentes, dans lequel la première teneur en eau est comprise entre 40 % en poids et 50 % en poids et la deuxième teneur en eau est inférieure de 4 % en poids à 10 % en poids à la première teneur en eau.

6. Procédé selon l'une des revendications précédentes, dans lequel l'évaporation en film mince est réalisée dans une opération continue avec apport continu de pâte de remplissage et évacuation continue de la pâte de remplissage.

7. Procédé selon la revendication 6, dans lequel l'évaporation en film mince présente les étapes partielles suivantes :
répartition de la pâte de remplissage apportée sur le côté supérieur d'une paroi présentant une pente,
écoulement vers le bas de la pâte de remplissage le long de la paroi sur base de la gravité et évacuation simultanée de l'eau évaporée et
évacuation de la pâte de remplissage qui s'est écoulée vers le bas.

8. Procédé selon la revendication 7, dans lequel la paroi est chauffée et présente une température comprise entre 20°C et 65°C.

9. Procédé selon les revendications 7 ou 8, dans lequel l'espace dans lequel l'eau est évaporée est maintenu à une dépression de 310 mbars ou plus basse.

10. Procédé selon l'une des revendications 7 à 9, dans lequel la paroi forme un tube et la pâte de remplissage s'écoule vers le bas sur le côté intérieur du tube.

11. Procédé selon l'une des revendications précédentes, dans lequel les éléments du support sont des vitres.

12. Procédé selon la revendication 11, dans lequel au moins l'une des vitres est précontrainte.

13. Procédé selon les revendications 11 ou 12, dans lequel au moins l'une des vitres est revêtue.
